# EUROPÄISCHE PATENTSCHRIFT

(11) **EP 0 586 898 B1**
(45) Veröffentlichungstag und Bekanntmachung des Hinweises auf die Patenterteilung: **31.01.1996**
(21) Anmeldenummer: 93112699.9
(22) Anmeldetag: 07.08.1993
(51) Int. Cl.: C08L 23/02, C08L 23/08, C08L 53/02, C08L 25/00

(54) **Thermoplastische Haftvermittlermischung**
Thermoplastic compatibilising blend
Mélange thermoplastique compatibilisant

(30) Priorität: 21.08.1992 DE 4227742
(43) Veröffentlichungstag der Anmeldung: 16.03.1994
(73) Patentinhaber: BASF Aktiengesellschaft, D-67063 Ludwigshafen (DE)
(72) Erfinder: Weber, Martin, Dr., D-6730 Neustadt (DE); Seitz, Friedrich, Dr., D-6701 Friedelsheim (DE); Jung, Andreas, Dr., D-6800 Mannheim 1 (DE); Guentherberg, Norbert, Dr., D-6720 Speyer (DE)

(56) Entgegenhaltungen:
- EP-A- 0 287 140
- EP-A- 0 291 352
- EP-A- 0 422 770
- EP-A- 0 527 390

## Beschreibung

Die vorliegende Erfindung betrifft eine thermoplastische Haftvermittlermischung, enthaltend
a) 5 bis 95 Gew.-% eines Ethylencopolymerisats (A_{I}) mit untergeordneten Anteilen von polaren Comonomeren und
b) 5 bis 95 Gew.-% eines Copolymeren (A_{II}) aus monovinylaromatischen Comonomeren und konjugierten Dienen.

Außerdem betrifft die vorliegende Erfindung eine thermoplastische Polymermischung, erhältlich aus den thermoplastischen Haftvermittlermischungen, Verfahren zur Herstellung derartiger Mischungen sowie deren Verwendung zur Herstellung von Fasern, Formteilen und Formkörpern.

Polyolefine zeichnen sich u.a. durch gute Chemikalienbeständigkeit und geringe Feuchtigkeitsaufnahme aus. Aufgrund ihres interessanten Preises und der guten Recyclierbarkeit finden Polyolefine auch zunehmend Verwendung als Konstruktionswerkstoffe, beispielsweise im Automobilbau. Für einige Anwendungen problematisch ist jedoch die relativ geringe Steifigkeit und Schlagfestigkeit der Polyolefine, des weiteren stellt auch die bei der Spritzgußverarbeitung von Polyolefinen auftretende Schwindung ein Problem dar.

Die genannten Nachteile der Polyolefine könnten durch Zusatz von Styrolcopolymeren, vorzugsweise kautschukmodifizierten Styrolcopolymeren wie beispielsweise ABS (Acrylnitril-Butadien-Styrol-Polymerisate) und ASA (Acrylnitril-Styrol-Acrylat-Polymerisate), überwunden werden, da sich die genannten Styrolcopolymere vor allem durch gute Steifigkeit und Zähigkeit sowie durch geringe Schwindung auszeichnen.

Polymermischungen, sogenannte Blends aus Polyolefinen und Styrolcopolymeren sind jedoch aufgrund der thermodynamischen Unverträglichkeit zweiphasig und besitzen sehr schlechte mechanische Eigenschaften. In der Literatur sind deshalb eine Reihe von Ansätzen bekannt, die Eigenschaften von Blends aus Polyolefinen und Styrolcopolymeren zu verbessern.

So beschreibt die DE-A-40 20 603 ein Harz, welches aus einem mit Säuregruppen modifizierten Polyolefin und einem Styrolcopolymeren hergestellt ist, das mindestens ein hydroxygruppenhaltiges Vinylmonomer, mindestens ein aromatisches Vinylmonomer und mindestens ein cyanogruppenhaltiges Vinylmonomer umfaßt. In Blends aus Polypropylen und Terpolymeren aus Acrylnitril, Butadien und Styrol, sogenannten ABS-Polymeren führt dieses Harz zu einer Reduzierung der Größe der dispergierten Partikel und zu einer Erhöhung der Izod-Schlagzähigkeit. Allerdings gestaltet sich dabei die Herstellung derartiger Styrolcopolymerer relativ aufwendig, da diese aus mehreren verschiedenen, hydroxy- und cyanogruppenhaltigen Monomeren aufgebaut sind.

In einer Reihe von Patentschriften, WO-A 90/0579, EP-A 42 153) wird der Einsatz von Styrol-Dien-Copolymeren als Haftvermittler für Blends aus Polyolefinen und Styrolcopolymeren beschrieben. Dabei können auch die durch Hydrierung aus Styrol-Dien-Copolymeren zugänglichen Styrol-Ethylen-Propylen-Butylen-Copolymere verwendet werden.

Aus der Patentschrift BE-B 806 707 ist ferner bekannt, daß sich Ethylen-Vinylacetat-Copolymere als Haftvermittler für Blends aus Polyolefinen und Styrolcopolymeren eignen.

Eine Verbesserung der mechanischen Eigenschaften von Mischungen aus Polypropylen und Styrolcopolymeren soll auch durch Zusatz chlorierter Polyolefine möglich sein (JP-A 54/087 746).

Weiterhin sind aus der EP-A 287 140 Polymerzusammensetzungen aus Ethylen-Propylen-Dien-Kautschuken, Ethylen-Vinylacetat-Copolymeren und Ethylen-Alk-1-en-Copolymeren bekannt, die sich als Haftvermittler in Styrolcopolymer/Polyolefin-Blends eignen.

Der vorliegenden Erfindung lag nun die Aufgabe zugrunde, den geschilderten Nachteilen abzuhelfen und einen neuen Haftvermittler zu entwickeln, der nach einem wenig aufwendigen Verfahren hergestellt werden kann und sich insbesondere als Haftvermittler für Blends aus Polyolefinen und Styrolcopolymeren eignet. Darüber hinaus erstreckt sich die Aufgabe auch auf die aus diesen Haftvermittlern erhältlichen Polymermischungen und auf Verfahren zu deren Herstellung.

Demgemäß wurde eine thermoplastische Haftvermittlermischung (A) gefunden, enthaltend
a) 5 bis 95 Gew.-% eines Ethylencopolymerisats (A_{I}) mit untergeordneten Anteilen von polaren Comonomeren und
b) 5 bis 95 Gew.-% eines Copolymeren (A_{II}) aus monovinylaromatischen Comonomeren und konjugierten Dienen.

Bevorzugt wird dabei eine solche thermoplastische Haftvermittlermischung (A) verwendet, die 10 bis 90 Gew.-%, insbesondere 15 bis 85 Gew.-% eines Ethylencopolymerisats (A_{I}) und 10 bis 90 Gew.-%, insbesondere 15 bis 85 Gew.-% eines Copolymeren (A_{II}) aufweist.

Das in der erfindungsgemäßen Haftvermittlermischung enthaltende Ethylencopolymerisat (A_{I}) weist untergeordnete Anteile von polaren Comonomeren auf. Bevorzugte Ethylencopolymerisate (A_{I}) enthalten bis zu 40 Gew.-% solcher polaren Comonomeren. Als polare Comonomere kommen dabei u.a. nitrilgruppen- und halogenhaltige aliphatische Vinylmonomere in Betracht. Vorzugsweise werden als polare Comonomere des Ethylencopolymerisats (A_{I}) α,β-ungesättigte Carbonsäuren bzw. -Carbonsäurederivate verwendet. Dazu zählen insbesondere Acrylsäure, Methacrylsäure, Ethacrylsäure, Maleinsäure und Fumarsäure, sowie deren Ester, Säureanhydride, Säurehalogenide und Imide. Besonders bevorzugte polare Comonomere sind insbesondere Acrylsäure, Methacrylsäure, sowie deren Ester mit aliphatischen Alkoholresten und deren Säureanhydride. Die Ethylencopolymerisate (A_{I}) können darüber hinaus noch bis zu 10 Gew.-% an einpolymerisierten C₃-C₈-Alk-1-enen enthalten, beispielsweise an Propylen, But-1-en, Pent-1-en oder Hex-1-en.

Die Herstellung der als Komponente A_{I} verwendeten Ethylencopolymeren erfolgt u.a. nach üblichen Hochdruckpolymerisationsverfahren [vgl. Ullmanns Enzyklopädie der technischen Chemie, 4. Auflage, Band 19, (1980), Seiten 169 bis 175, Verlag Chemie GmbH, W-6940 Weinheim]. Die Copolymerisation des Ethylens mit den polaren Comonomeren, insbesondere den α,β-ungesättigten Carbonsäuren bzw. -Carbonsäurederivaten wird dabei bei Drücken von 350 bis 5000 bar, vorzugsweise 1500 bis 3000 bar durchgeführt. Bei der Herstellung der Copolymerisate des Ethylens arbeitet man im besonderen bei Drücken von 2000 bis 2800 bar. Die Temperaturen im Polymerisationssystem liegen üblicherweise zwischen 50 und 450°C, vorzugsweise zwischen 150 und 350°C. Weitere Ausführungen zur Herstellung der verwendeten Ethylencopolymere sowie eine Aufstellung geeigneter Comonomere sind beispielsweise der EP-A 131 707 zu entnehmen.

Als Copolymere (A_{II}) werden innerhalb der erfindungsgemäßen thermoplastischen Haftvermittlermischung (A) Copolymere aus monovinylaromatischen Comonomeren, beispielsweise Styrol oder α-Methylstyrol sowie konjugierte Diene verwendet. Ein besonders geeignetes monovinylaromatisches Comonomer ist dabei Styrol. Als konjugierte Diene werden u.a. Butadien oder Isopren eingesetzt, wobei Butadien bevorzugt verwendet wird. Als Copolymere (A_{II}) können auch solche Copolymeren eingesetzt werden, die dadurch erhältlich sind, daß man zunächst monovinylaromatische Comonomere mit konjugierten Dienen polymerisiert und anschließend einer Hydrierungsreaktion unterwirft.

Derartige Copolymere (A_{II}) sind insbesondere durch anionische Polymerisation von monovinylaromatischen Comonomeren und konjugierten Dienen erhältlich. Dabei entstehen vorwiegend Blockcopolymerisate dieser Comonomere. Methoden zur Herstellung derartiger Copolymerisate (A_{II}) sind allgemein bekannt (US-A 3,595,942).

Die verwendeten Copolymere (A_{II}) können beliebige Struktur besitzen, besonders bevorzugt sind Blockcopolymere mit Dreiblockstruktur sowie verzweigte, sogenannte sternförmige Strukturen mit Multiblockstruktur. Die Synthese sternförmig aufgebauter Blockcopolymere aus monovinylaromatischen Monomeren und Dienmonomeren sind Gegenstand der DE-OS 19 59 922, die Synthese sternförmig aufgebauter Blockcopolymerer mit mehrfacher Initiierung ist Gegenstand der DE 25 50 226 sowie der US-A 3,639,517.

Geeignete Monomere sowie Initiatoren sind ebenfalls den genannten Schriften zu entnehmen. Besonders bevorzugt werden dabei Blockcopolymere auf Basis von Styrol als monovinylaromatisches Monomer sowie Butadien und/oder Isopren als konjugierte Dienmonomere. Der Anteil des monovinylaromatischen Monomeren an den eingesetzten Copolymeren (A_{II}) beträgt 25 bis 95, vorzugsweise 40 bis 90 Gew.-%.

Die erfindungsgemäße thermoplastische Haftvermittlermischung (A) ist erhältlich durch Vermischen der Komponenten (A_{I}) und (A_{II}), d.h. dem Ethylencopolymerisat (A_{I}) und dem Copolymerisat (A_{II}), in einer geeigneten Mischvorrichtung bei mittleren Verweilzeiten der Komponenten von 0,2 bis 30 Minuten, insbesondere von 0,3 bis 20 Minuten und Temperaturen von 220 bis 290°C, insbesondere von 230 bis 270°C. Geeignete Mischvorrichtungen sind dabei u.a. Schneckenextruder, vorzugsweise Zweischneckenextruder, Brabender-Mühlen, Banburry-Mühlen, sowie Kneter. Die Komponenten werden dabei zunächst über entsprechende Einzugsvorrichtungen in die Mischvorrichtungen eingebracht, dort aufgearbeitet und anschließend wieder ausgetragen, gekühlt und danach zerkleinert.

Die auf diese Weise erhältliche thermoplastische Haftvermittlermischung (A) kann als wesentlicher Bestandteil einer ebenfalls thermoplastischen Polymermischung verwendet werden.

Die Haftvermittlermischung (A) kann u.a. als Granulatmischung sowie nach vorhergehender Homogenisierung mittels Schmelzkompoundierung eingesetzt werden. Bevorzugt wird die Verwendung von schmelzkompoundiertem Material.

Die ebenfalls erfinderische thermoplastische Polymermischung enthält u.a.
a) 0,5 bis 30 Gew.-% der thermoplastischen Haftvermittlermischung (A),
b) 5 bis 95 Gew.-% Polyolefine (B) und
c) 5 bis 95 Gew.-% Copolymerisate des Styrols (C).

Bevorzugt weist die erfinderische Polymermischung u.a.
a) 1 bis 20 Gew.-% der thermoplastischen Haftvermittlermischung (A),
b) 10 bis 75 Gew.-% Polyolefine (B) und
c) 10 bis 75 Gew.-% Copolymerisate des Styrols (C) auf.

Als Polyolefine (B) werden insbesondere Propylenhomopolymerisate, Ethylenhomopolymerisate sowie Propylen-Ethylen-Copolymerisate verwendet. Es können aber auch Copolymerisate des Propylens und des Ethylens mit untergeordneten Anteilen von C₄-C₈-Alk-1-enen, beispielsweise von But-1-en, Pent-1-en oder Hex-1-en eingesetzt werden.

Geeignete Propylenpolymerisate und Ethylenpolymerisate sind dem Fachmann bekannt und in der Literatur beschrieben, so daß sich hier detaillierte Angaben zur Herstellung bzw. Zusammensetzung erübrigen.

Prinzipiell eigenen sich sowohl Propylenhomopolymerisate als auch Propylencopolymerisate, insbesondere sogenannte "schlagzähe Propylenpolymerisate", wie sie z.B. durch stufenweise Polymerisation nach an sich bekannten Verfahren erhältlich sind.

Beispielhaft seien hier die DE-A 40 01 157 und die DE-A 40 11 160 sowie die dort zitierten Veröffentlichungen für die Herstellung von Propylencopolymeren genannt.

Gegenstand der DE-A 40 11 160 sind dabei Copolymerisate des Propylens mit Alk-1-enen, die durch Polymerisation von Gemischen aus Propylen und den entsprechenden Alk-1-enen, vorzugsweise in der Gasphase in Abwesenheit eines flüssigen Reaktionsmediums hergestellt werden. Dabei werden die Partialdrücke von Propylen und den anderen Alk-1-enen im allgemeinen innerhalb des Bereichs von 5:1 bis 100:1 gewählt.

Der Anteil an Einheiten, die sich von den anderen Alk-1-enen ableiten, liegt in derartigen Propylencopolymeren im allgemeinen im Bereich von 1 bis 30, vorzugsweise 2 bis 20 und insbesondere 2 bis 10 Gew.-%. Als Comonomere bevorzugte Alk-1-ene sind u.a. Ethylen und But-1-en.

In der DE-A 40 01 157 werden Propylen-Ethylen-Copolymerisate beschrieben, die nach einem zweistufigen Verfahren erhältlich sind. Dabei wird zunächst in einer ersten Stufe ein Propylenhomopolymerisat hergestellt, und anschließend in einer zweiten Stufe ein Gemisch aus Ethylen und Propylen in Anwesenheit des in der ersten Stufe hergestellten Produkts polymerisiert. Dieses Verfahren kann noch in verschiedener Weise variiert werden; wegen näherer Einzelheiten sei hier auf die DE-A 40 01 157 selbst verwiesen.

Zur Herstellung derartiger Propylenhomopolymerisate sei insbesondere noch auf das in der US-A 48 57 613 beschriebene Gasphasenpolymerisationsverfahren mit geträgerten Ziegler-Natta-Katalysatoren verwiesen.

Die entsprechenden Ethylenpolymerisate können analog wie die Propylenpolymerisate mit Hilfe der gleichen Verfahren hergestellt werden. Darüber hinaus sind sie noch durch Polymerisation mit Hilfe von chromhaltigen Phillipskatalysatoren oder durch Hochdruckpolymerisation zugänglich.

Derartige Polyolefine werden u.a. unter den Handelsnamen Novolen® für Propylenpolymerisate und Lupolen® für Ethylenpolymerisate von der BASF Aktiengesellschaft vertrieben.

Die verwendeten Polyolefine (B) weisen im allgemeinen mittlere Molmassen (Gewichtsmittel) von 10 000 bis 500 000 und Schmelzflußindices von 0,1 bis 100 g/10 min, vorzugsweise von 0,2 bis 50 g/10 min auf, jeweils gemessen nach DIN 53 735 bei 230°C und 2,16 kg. Der Schmelzflußindex entspricht dabei der Menge an Polymerisat, die innerhalb von 10 Minuten aus der nach DIN 53 735 genormten Prüfvorrichtung bei einer Temperatur von 230°C und unter einem Gewicht von 2,16 kg ausgepreßt wird.

Als Komponente (C) enthalten die erfindungsgemäßen thermoplastischen Polymermischungen 5 bis 95, vorzugsweise 10 bis 75 Gew.-% Styrolcopolymere, insbesondere schlagzähmodifizierte Styrolcopolymere wie Acrylnitril-Butadien-Styrol-Polymerisate (ABS) und Acrylnitril-Styrol-Acrylat-Polymerisate (ASA). Derartige Styrolcopolymere (C) sind dem Fachmann bekannt.

Als ABS- oder ASA-Polymerisate werden ganz allgemein Mischungen aus Pfropfpolymerisaten mit einer "weichen" Pfropfgundlage verstanden, deren Glasübergangstemperatur (Tg) im Regelfall unter 10°C liegt und die eine auf sie aufgepfropfte Hülle aus Monomeren, deren Polymerisate eine Glasübergangstemperatur von vorzugsweise mehr als 25°C aufweisen, enthalten. Daneben weisen ABS- bzw. ASA-Polymerisate im allgemeinen noch Copolymere aus den Monomeren, die die Pfropfhülle des Pfropfcopolymerisats bilden, auf. Diese werden als sog. "Hartkomponente" bezeichnet.

ABS und ASA-Polymerisate unterscheiden sich im wesentlichen in der chemischen Zusammensetzung der Pfropfgrundlage - in ASA-Polymerisaten werden Acrylatkautschuke eingesetzt, in ABS-Polymerisaten Dienkautschuke, insbesondere auf der Basis von Butadien.

Die Herstellung derartiger Copolymerisate des Styrols (C) wird beispielsweise in der EP-A 062 901 oder der DE-A 1 260 135 beschrieben.

Der Styrolanteil liegt in diesen Copolymerisaten (C) vorzugsweise im Bereich von 20 bis 90 Gew.-%, insbesondere im Bereich von 40 bis 70 Gew.-%.

Darüber hinaus kann es sich empfehlen, der erfindungsgemäßen thermoplastischen Polymermischung noch 0,1 bis 40 Gew.-%, insbesondere 1 bis 30 Gew.-%, bezogen auf die Gesamtmenge der thermoplastischen Polymermischung, weiterer thermoplastischer Polymerer (D) hinzuzufügen. Als thermoplastische Polymere (D) werden dabei insbesondere Polyamide, Polyester, Polycarbonate, Polyacrylate, Polymethacrylate der Polyoximethylene oder Mischungen aus diesen Polymeren verwendet.

Die dabei verwendbaren Polyamide sind an sich bekannt. Beispiele hierfür sind u.a. Polyhexamethylenadipinsäureamid, Polyhexamethylenpimelinsäureamid, Polyhexamethylenkorksäureamid, Polyhexamethylenazelainsäureamid, Polyhexamethylensebacinsäureamid, Polyhexamethylendodekandisäureamid, Polyoctamethylenkorksäureamid, Polydodekamethylendodekandisäureamid, Poly-11-aminoundekansäureamid und Bis-(4-aminocyclohexyl)-methandodekansäureamid oder die durch Ringöffnung von Lactamen, z.B. Polycaprolactam oder Polylaurinlactam, erhaltenen Produkte. Auch Polyamide auf der Basis von Terephthal- oder Isophthalsäure als Säurekomponente und/oder Trimethylhexamethylendiamin, Bis-(4-aminocyclohexyl)-methan oder 2,2-Di-(4-aminocyclohexyl)-propan als Diaminkomponente sowie Polyamidgrundharze, die durch Copolymerisation zweier oder mehrerer der vorgenannten Polymeren oder deren Komponenten hergestellt worden sind, sind geeignet. Als Beispiel hierfür sei ein Copolykondensat aus Terephthalsäure, Isophthalsäure, Hexamethylendiamin und Caprolactam (PA 6/6T) genannt.

Vorzugsweise setzt man teilkristalline Polyamide ein, bevorzugt PA 6, PA 66, PA 6/6T, PA 66/6T (Copolykondensat aus Hexamethylendiamin, Adipinsäure, Caprolactam, Terephthalsäure und Isophthalsäure) sowie PA 46.

Die Herstellung dieser Polyamide erfolgt in an sich bekannter Weise (s. z.B. Encyclopedia of Polymer Science and Engineering, Vol. 11, S. 315 bis 489, John Wiley & Sons, Inc. 1988, sowie für teilaromatische Copolyamide in Anlehnung an die in der EP-A 129 195 und 129 196 beschriebenen Verfahren).

Im allgemeinen wählt man die Molekulargewichte der Polyamide im Bereich von 8000 bis 50000, bevorzugt im Bereich von 12000 bis 30000 (Zahlenmittel des Molekulargewichts).

Das Verhältnis von endständigen Säuregruppen zu endständige Aminogruppen kann durch Variation des Molverhältnisses der Ausgangsverbindungen gesteuert werden.

Die Polyamide der erfindungsgemäßen Formmassen weisen im allgemeinen eine relative Viskosität ηᵣₑₗ von 1,7 bis 5,0 auf, bestimmt in einer 1 gew.-%igen Lösung in 96 gew.-%iger Schwefelsäure bei 25°C. Polyamide mit einer relativen Viskosität von 2,3 bis 4,5, insbesondere von 2,5 bis 4,0 werden bevorzugt verwendet.

Weiterhin können als thermoplastische Polymere (D) Polyester eingesetzt werden.

Allgemein werden Polyester auf der Basis von aromatischen Dicarbonsäuren und einer aliphatischen oder aromatischen Dihydroxyverbindung verwendet.

Eine erste Gruppe bevorzugter Polyester sind Polyalkylenterephthalate mit 2 bis 10 C-Atomen im Alkoholteil.

Derartige Polyalkylenterephthalate sind an sich bekannt und in der Literatur beschrieben. Sie enthalten einen aromatischen Ring in der Hauptkette, der von der aromatischen Dicarbonsäure stammt. Der aromatische Ring kann auch substituiert sein, z.B. durch Halogen wie Chlor und Brom oder durch C₁-C₈-Alkylgruppen wie Methyl-, Ethyl-, i- bzw. n-Propyl- und n-, i- bzw. t-Butylgruppen.

Diese Polyalkylenterephthalate können durch Umsetzung von aromatischen Dicarbonsäuren, deren Estern oder anderen esterbildenden Derivaten mit aliphatischen Dihydroxyverbindungen in an sich bekannter Weise hergestellt werden.

Als bevorzugte Dicarbonsäuren sind Naphthalindicarbonsäure, Terephthalsäure und Isophthalsäure oder deren Mischungen zu nennen. Bis zu 30 mol.%, vorzugsweise nicht mehr als 10 mol.% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden.

Von den aliphatischen Dihydroxyverbindungen werden Diole mit 2 bis 6 Kohlenstoffatomen, insbesondere 1,2-Ethandiol, 1,4-Butandiol, 1,6-Hexandiol, 1,4-Hexandiol, 1,4-Cyclohexandiol und Neopentylglykol oder deren Mischungen bevorzugt.

Die relative Viskosität der Polyester liegt im allgemeinen im Bereich von 1,2 bis 1,8 (gemessen in einer 0,5 gew.%igen Lösung in einem Phenol/o-Dichlorbenzolgemisch (Gew.-Verh. 1:1 bei 25°C).

Als weitere Gruppe sind voll aromatische Polyester zu nennen, die sich von aromatischen Dicarbonsäuren und aromatischen Dihydroxyverbindungen ableiten.

Als aromatische Dicarbonsäuren eignen sich die bereits bei den Polyalkylenterephthalaten beschriebenen Verbindungen. Bevorzugt werden Mischungen aus 5 bis 100 mol.% Isophthalsäure und 0 bis 95 mol.% Terephthalsäure, insbesondere etwa äquivalente Mischungen dieser beiden Säuren.

Die aromatischen Dihydroxyverbindungen haben vorzugsweise die allgemeine Formel I 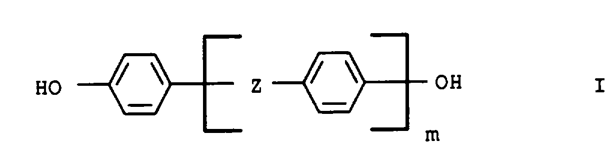 in der Z eine Alkylen- oder Cycloalkylengruppe mit bis zu 8 C-Atomen, eine Arylengruppe mit bis zu 12 C-Atomen, eine Carbonylgruppe, eine Sulfonylgruppe, ein Sauerstoff- oder Schwefelatom oder eine chemische Bindung darstellt und in der m den Wert 0 oder 1 hat. Die Verbindungen I können an den Phenylengruppen auch C₁-C₈-Alkylgruppen und Fluor, Chlor, oder Brom als Substituenten tragen.

Selbstverständlich kann man auch Mischungen von Polyalkylenterephthalaten und vollaromatischen Polyestern einsetzen. Diese enthalten im allgemeinen 20 bis 98 Gew.% des Polyalkylenterephthtalates und 2 bis 80 Gew.% des vollaromatischen Polyesters.

Als thermoplastische Polymere (D) können darüber hinaus auch noch Polycarbonate, Polyarylate, Polymethacrylate oder Polyoximethylene in Betracht kommen.

Unter Polycarbonaten im Sinne der vorliegenden Erfindung sollen solche Polycarbonate verstanden werden, die durch Polymerisation von aromatischen Dihydroxyverbindungen, insbesondere Bis-(4-hydroxyphenyl)2,2-propan (Bisphenol A) oder dessen Derivaten, z.B. mit Phosgen erhältlich sind. Entsprechende Produkte sind an sich bekannt und in der Literatur beschrieben sowie größtenteils auch im Handel erhältlich.

Beispiele für Polyacrylate und Polymethacrylate sind u.a. die im Handel erhältlichen Polymerisate der Acrylsäure, der Methacrylsäure sowie ihrer Ester. Derartige Polyacrylate und Polymethacrylate werden insbesondere durch radikalische Polymerisation der entsprechenden Monomere hergestellt. Derartige Herstellungsverfahren sind dem Fachmann bekannt. (Kunststoff-Taschenbuch, H.-J. Saechtling, 22. Auflage, 1983, Carl-Hanser-Verlag, München).

Weiterhin können als thermoplastische Polymere (D) noch Polyoximethylene verwendet werden. Unter Polyoximethylenen sind in diesem Zusammenhang sowohl die jeweiligen Homopolymerisate als auch die entsprechenden Copolymerisate mit anderen Alkoxygruppen enthaltenden Comonomeren von Bedeutung.

Derartige Polymerisate sind dem Fachmann an sich bekannt und in der Literatur beschrieben.

Ganz allgemein weisen diese Polymere mindestens 50 mol-% an wiederkehrenden Einheiten -CH₂O- in der Polymerhauptkette auf.

Die Homopolymeren werden im allgemeinen durch Polymerisation von Formaldehyd oder Trioxan hergestellt, vorzugsweise in der Gegenwart von geeigneten Katalysatoren.

Neben diesen Bestandteilen A, B, C sowie gegebenenfalls D können die erfindungsgemäßen thermoplastischen Polymermischungen noch bis zu 40 Gew.-%, insbesondere noch bis zu 30 Gew.-% üblicher Zusätze wie beispielsweise Verarbeitungshilfsmittel, Stabilisatoren, Pigmente, Füllstoffe, Flammschutzmittel, Nukleierungsmittel, Gleitmittel oder Antioxidantien enthalten.

Die erfindungsgemäßen thermoplastischen Formmassen können nach an sich bekannten Verfahren hergestellt werden, indem man die Ausgangskomponenten A, B, C, sowie gegebenenfalls D in üblichen Mischvorrichtungen wie Schneckenextrudern, vorzugsweise Zweischneckenextruder, Brabender Mühlen oder Banburry-Mühlen sowie Knetern mischt und anschließend extrudiert. Nach der Extrusion wird das Extrudat abgekühlt und zerkleinert.

Um eine möglichst homogene Formmasse zu erhalten, ist eine intensive Durchmischung vorteilhaft. Dazu werden im allgemeinen mittlere Verweilzeiten der Komponenten von 0,2 bis 30 Minuten bei einer Temperatur von 220 bis 290°C, vorzugsweise 230 bis 270°C, eingehalten.

Die Reihenfolge der Mischung kann variiert werden, so können zwei Komponenten unter Umständen vorgemischt werden, es können aber auch alle Komponenten gemeinsam gemischt werden.

Nach einer Variante des ebenfalls erfindungsgemäßen Herstellungsverfahrens der thermoplastischen Polymermischung können die Komponenten (B), (C), sowie gegebenenfalls (D) im Umfang von bis zu 100 Gew.-%, bezogen auf den jeweiligen Anteil in der Formmasse, aus wiederverwerteten Polymerisaten bestehen, die durch Regranulieren von Formteilen der betreffenden Materialien erhältlich sind.

Mit Hilfe der erfindungsgemäßen thermoplastischen Haftvermittlermischung lassen sich insbesondere Blends aus Polyolefinen und Styrolcopolymeren ohne großen Aufwand herstellen. Die daraus erhältlichen thermoplastischen Polymermischungen weisen u.a. eine hohe mechanische Festigkeit, vor allem eine hohe Schlagbiegefestigkeit auf. Sie eignen sich insbesondere zur Herstellung von Fasern, Folien und Formkörpern.

### Beispiele

### I Verwendete Komponenten

Die Komponenten A₁, A₂ und A₃ (thermoplastische Haftvermittlermischungen) wurden jeweils durch Schmelzkompoundierung in einem Zweischneckenextruder bei einer Temperatur von 240°C und einer mittleren Verweilzeit der einzelnen Polymeren von 0,5 bis 3,0 min. hergestellt.

### Thermoplastische Haftvermittlermischung A₁

Erhalten durch Schmelzekompoundierung von 2 kg Ethylencopolymer (enthaltend 35 Gew.-% n-Butylacrylat, 5 Gew.-% Acrylsäure; Schmelzflußindex: 10 ml/10 min, bei 190°C und 2,16 kg) und 3 kg eines Styrol-Butadien-Blockcopolymers mit verzweigtem Aufbau, einem Styrolanteil von 75 Gew.-% und einer Viskositätszahl von 86 ml/g (bestimmt in einer 0,5 % Lösung in Toluol bei 25°C).

### Thermoplastische Haftvermittlermischung A₂

Erhalten durch Schmelzekompoundierung von 4 kg Ethylencopolymer (enthaltend 35 Gew.-% n-Butylacrylat, 5 Gew.-% Acrylsäure; Schmelzflußindex: 10 ml/min, bei 190°C und 2,16 kg) und 1 kg eines Styrol-Butadien-Blockcopolymers mit verzweigtem Aufbau, einem Styrolanteil von 75 Gew.-% und einer Viskositätszahl von 86 ml/g (bestimmt in einer 0,5 % Lösung in Toluol bei 25°C).

### Thermoplastische Haftvermittlermischung A₃

Erhalten durch Schmelzekompoundierung von 4 kg Ethylencopolymer (enthaltend 35 Gew.-% n-Butylacrylat, 5 Gew.-% Acrylsäure, Schmelzflußindex 10 ml/min., bei 190°C und 2,16 kg) und 1 kg eines Styrol-Butadien-Copolymers mit Dreiblock-Aufbau, einem Styrolanteil von 77 Gew.-% und einer Viskositätszahl von 99 ml/g bestimmt in einer 0,5 % Lösung in Toluol bei 25°C).

### Komponente B₁

Propylenhomopolymerisat (Novolen^{®} 1100 H der BASF Aktiengesellschaft), charakterisiert durch einen Volumenfließindex (MVI) von 2,5 bei 230°C/2,16 kg (nach DIN 53 735) und einen E-Modul von 1400 N/mm (bestimmt nach DIN 53 457).

### Komponente B₂

Polypropylenregranulat, erhalten durch Zerkleinern von Formteilen der Komponente B₁, die 6 Monate im Freien gelagert wurden; charakterisiert durch einen Schmelzflußindex von 3 g/10 min, bei 230°C/2,16 kg, nach DIN 53 735.

### Komponente C₁

ABS-Copolymer enthaltend 43 Gew.-% eines Pfropfcopolymeren mit einem Polybutadienkern (60 Gew.-%) und eine darauf aufgepfropfte Styrol/Acrylnitril-Hülle (40 Gew.-%; Gew.-Verh. Styrol/Acrylnitril 75:25), sowie 57 Gew.-% eines Styrol/ Acrylnitril Copolymerisats mit 75 Gew.-% Styrol und 25 % Acrylnitril, charakterisiert durch einen Schmelzflußindex (MFI) von 8 g/10 min bei 200°C/21,6 kg (nach DIN 53 735) und einen E-Modul von 1900 N/mm (bestimmt nach DIN 53 457).

### Komponente C₂

ABS-Regranulat, erhalten durch Zerkleinern von Formteilen der Komponente C₁, die 6 Monate im Freien gelagert wurden, charakterisiert durch einen Schmelzflußindex (MFI) von 11 g/10 min bei 200°C/21,6 kg (nach DIN 53 735).

### Komponente C₃

ASA-Copolymer, enthaltend 42 Gew.-% einer Pfropfcopolymeren mit 60 Gew.-% einer Pfropfgrundlage aus 98 Gew.-% n-Butylacrylat und 2 Gew.-% eines polyfunktionellen Monomeren (Dihydrodicyclopentadienylacrylat) und 40 Gew.-% einer darauf aufgepfropften Mischung aus Styrol und Acrylnitril im Gew.-Verhältnis 75/25, sowie 58 Gew.-% eines Styrol/Acrylnitril (75/25 Gew.-Verh.)-Copolymerisats, charakterisiert durch einen Schmelzflußindex (MFI) von 8 g/10 min bei 200°C/21,6 kg (nach DIN 53 735) und einen E-Modul von 2300 N/mm (bestimmt nach DIN 53 457).

### Komponente C₄

ASA-Regranulat, erhalten durch Zerkleinern von Formteilen, die mindestens 6 Monate gebrauchsmäßigen Belastungen ausgesetzt waren, charakterisiert durch einen Schmelzflußindex (MFI) von 10 g/10 min bei 200°C/21,6 kg (nach DIN 53 735).

### Komponente D₁

Polycarbonat auf Basis Bisphenol A (Lexan 161® der Firma General Electric), charakterisiert durch einen E-Modul von 2300 N/mm2 (bestimmt nach DIN 53 457).

### Komponente D₂

Polycarbonat/ABS-Blend (60 Gew.-% Lexan^{®} 161 der Fa. General Electric/40 Gew.-% ABS, Komponente C₁), charakterisiert durch einen Volumenfließindex (MVI) von 12 ml/10 min bei 260°C/5 kg (nach DIN 53 735) und einen E-Modul von 2200 N/mm (bestimmt nach DIN 53 457).

### Komponente D₃

Polycarbonat/ASA-Blend (60 Gew.-% Lexan^{®} 161 der Fa. Genral Electric, 40 Gew.-% ASA, Komponente C₃), charakterisiert durch einen Volumenfließindex (MVI) von 12 ml/10 min bei 260°C/5 kg (nach DIN 53 735) und einen E-Modul von 2300 N/mm (bestimmt nach DIN 53 457).

### II. Herstellung der thermoplastischen Formmassen

Die Bestandteile wurden in einem Zweiwellenextruder der Firma Werner & Pfleiderer bei einer Massetemperatur von 240 bis 270°C gemischt. Dabei wurden die Polymergranulate der Komponenten A, B, C, sowie gegebenenfalls D in den Einzug des Extruders dosiert, die Schmelze wurde in ein Wasserbad geleitet und granuliert. Das getrocknete Granulat wurde bei 230 bis 260°C zu Rundscheiben und Normkleinstäben verspritzt.

Die Schlagbiegefestigkeit ak wurde bei 23°C an gekerbten Normkleinstäben nach DIN 53 453 bestimmt.

Die Durchstoßarbeit Wₛ wurde bei 23°C nach DIN 53 443 bestimmt.

Die Zusammensetzung der Formmassen und Ergebnisse der Messungen sind den Tabellen 1 bis 5 zu entnehmen.

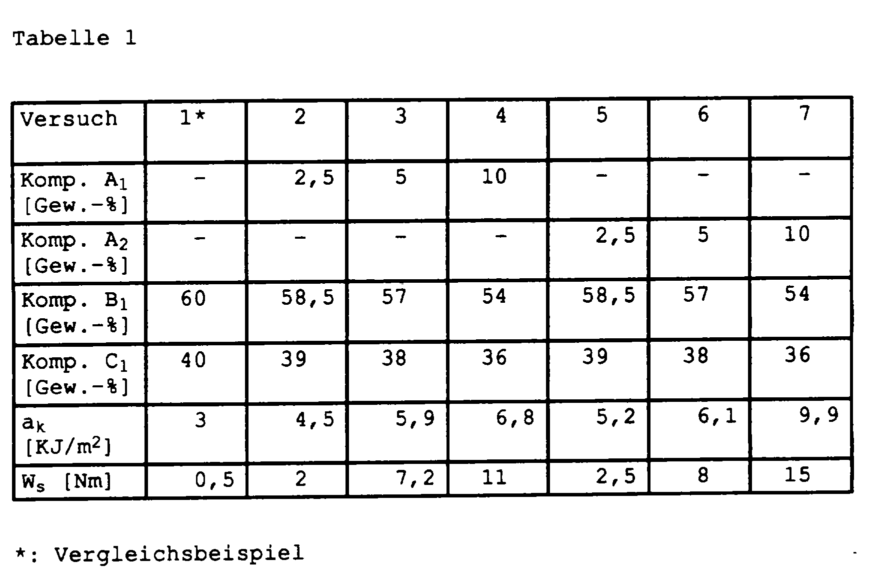

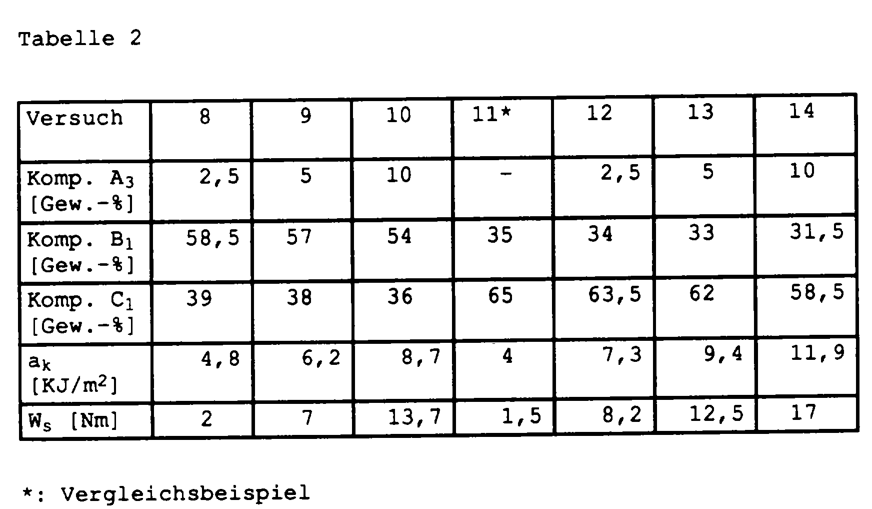

Wie die Ergebnisse der Versuche 1 bis 14 zeigen, wird die Kerbschlagzähigkeit aₖ und Durchstoßarbeit Wₛ von Blends aus Polypropylen und ABS durch Zusatz der erfindungsgemäßen Haftvermittlermischung entscheident verbessert.

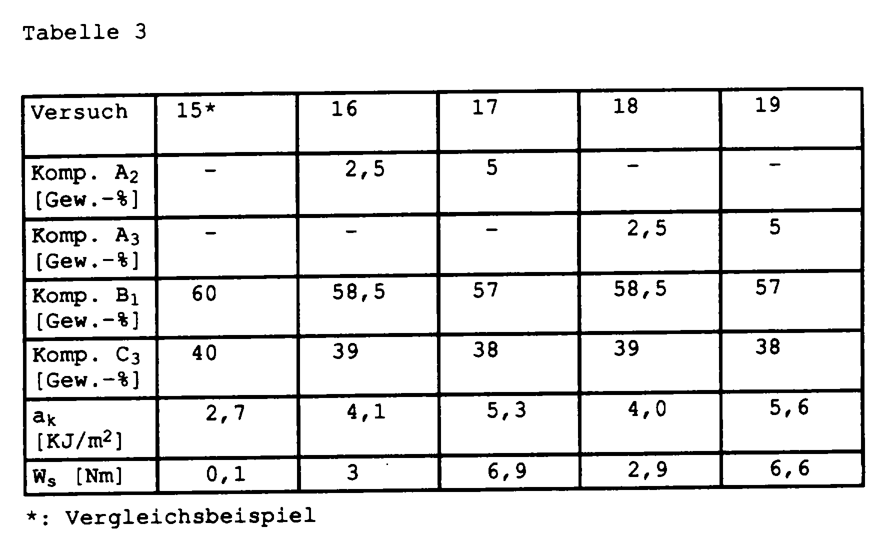

Auch in Polypropylen/ASA-Blends führt die Haftvermittlermischung zu Eigenschaftsverbesserungen.

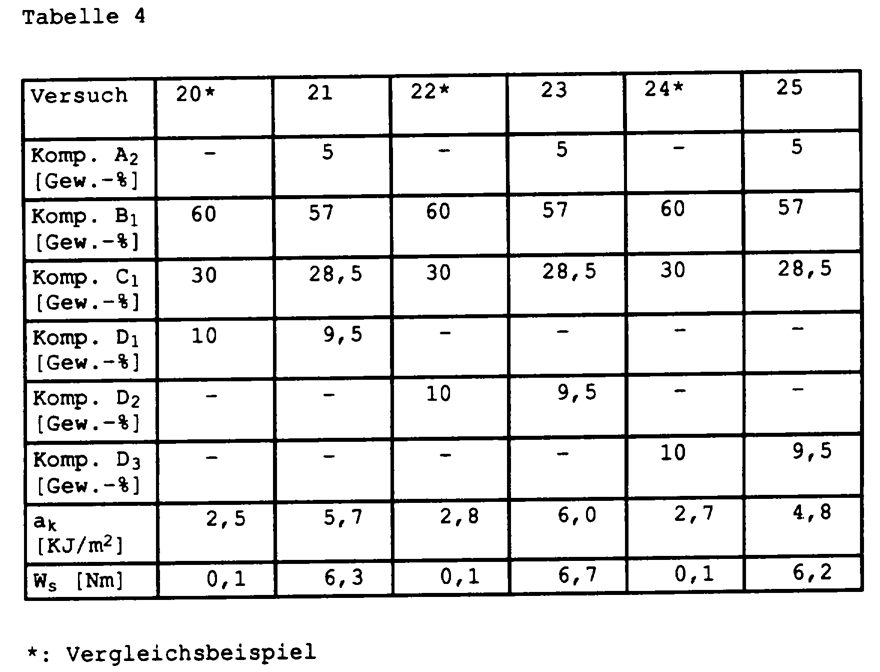

Die Ergebnisse der Versuche 20 bis 25 zeigen deutlich, daß die Haftvermittlermischung auch in Blends, die neben Polypropylen und ABS weitere Thermoplaste enthalten, zu einer Verbesserung der Zähigkeit führt.

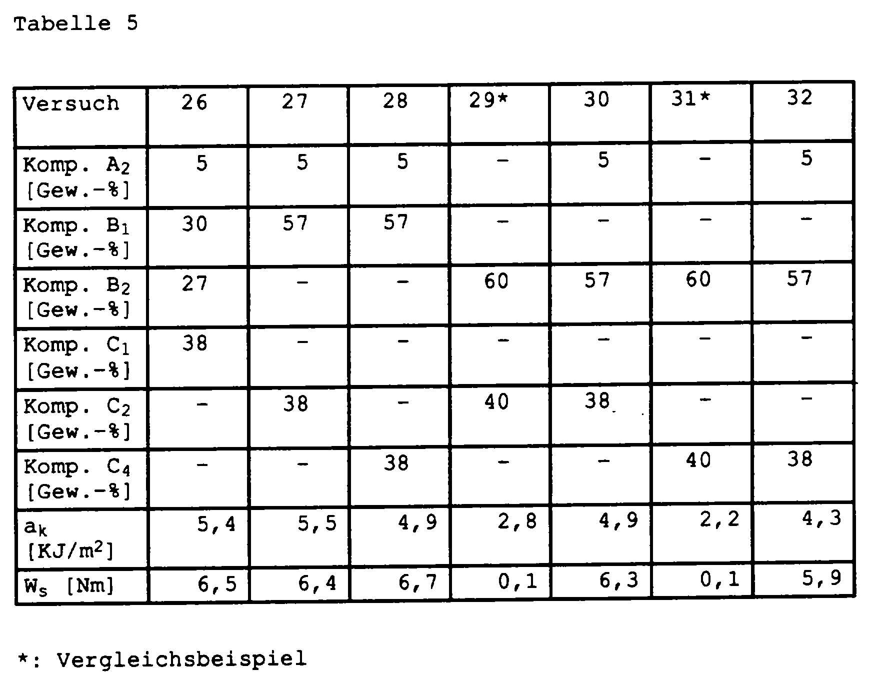

In Blends, die unter Verwendung von Regranulat hergestellt wurden, führt die Haftvermittlermischung ebenfalls zu einer deutlichen Verbesserung der Zähigkeit.

## Patentansprüche

1. Thermoplastische Haftvermittlermischung (A), enthaltend
a} 5 bis 95 Gew.-% eines Ethylencopolymerisats (A_{I}) mit untergeordneten Anteilen von polaren Comonomeren und
b) 5 bis 95 Gew.-% eines Copolymeren (A_{II}) aus monovinylaromatischen Comonomeren und konjugierten Dienen.

2. Thermoplastische Haftvermittlermischung (A) nach Anspruch 1, wobei als polare Comonomere des Ethylencopolymerisats (A_{I}) α,β-ungesättigte Carbonsäuren bzw. -Carbonsäurederivate verwendet werden.

3. Thermoplastische Haftvermittlermischung (A) nach den Ansprüchen 1 oder 2, wobei als monovinylaromatisches Comonomeres des Copolymeren (A_{II}) Styrol verwendet wird.

4. Thermoplastische Haftvermittlermischung (A) nach den Ansprüchen 1 bis 3, wobei als konjugiertes Dien innerhalb des Copolymeren (A_{II}) Butadien verwendet wird.

5. Thermoplastische Haftvermittlermischung (A) nach den Ansprüchen 1 bis 4, wobei Copolymere (A_{II}) verwendet werden, die dadurch erhältlich sind, daß man zunächst monovinylaromatische Comonomere mit konjugierten Dienen polymerisiert und anschlieβend einer Hydrierungsreaktion unterwirft.

6. Thermoplastische Polymermischung, enthaltend
a) 0,5 bis 30 Gew.-% der thermoplastischen Haftvermittlermischung (A)
b) 5 bis 95 Gew.-% Polyolefine (B) und
c) 5 bis 95 Gew.-% Copolymerisate des Styrols (C).

7. Thermoplastische Polymermischung nach Anspruch 6, enthaltend als weiteren Bestandteil
d) 0,1 bis 40 Gew.-% weiterer thermoplastischer Polymerer (D).

8. Verfahren zur Herstellung der thermoplastischen Haftvermittlermischung (A) gemäß den Ansprüchen 1 bis 5, dadurch gekennzeichnet, daß man die Komponenten (A_{I}) und (A_{II}) in einer geeigneten Mischvorrichtung bei mittleren Verweilzeiten der Komponenten von 0,2 bis 30 Minuten und Temperaturen von 220 bis 290°C vermischt.

9. Verfahren zur Herstellung einer thermoplastischen Polymermischung gemäß den Ansprüchen 6 oder 7, wobei die einzelnen Komponenten (A), (B), (C), sowie gegebenenfalls (D) in einer geeigneten Mischvorrichtung bei mittleren Verweilzeiten der Komponenten von 0,2 bis 30 Minuten und Temperaturen von 220 bis 290°C vermischt werden.

10. Verfahren nach Anspruch 9, dadurch gekennzeichnet, daß die Komponenten (B), (C), sowie gegebenenfalls (D) im Umfang von bis zu 100 Gew.-%, bezogen auf den jeweiligen Anteil in der Formmasse, aus wiederverwerteten Polymerisaten bestehen, die durch Regranulieren von Formteilen der betreffenden Materialien erhältlich sind.

11. Verwendung der thermoplastischen Polymermischung gemäß den Ansprüchen 6 oder 7 zur Herstellung von Fasern, Folien und Formkörpern.

## Claims

1. A thermoplastic coupling agent mixture (A), containing
a) 5 to 95% by weight of an ethylene copolymer (A_{I}) having minor amounts of polar comonomers, and
b) 5 to 95% by weight of a copolymer (A_{II}) of aromatic monovinyl comonomers and conjugated dienes.

2. A thermoplastic coupling agent mixture (A) as claimed in claim 1, wherein the polar comonomers of the ethylene copolymer (A_{I}) used are α,β-unsaturated carboxylic acids or carboxylic acid derivatives.

3. A thermoplastic coupling agent mixture (A) as claimed in claim 1 or 2, wherein the aromatic monovinyl comonomer of the copolymer (A_{II}) used is styrene.

4. A thermoplastic coupling agent mixture (A) as claimed in claim 1 or 2 or 3, wherein the conjugated diene used in the copolymer (A_{II}) is butadiene.

5. A thermoplastic coupling agent mixture (A) as claimed in claim 1 or 2 or 3 or 4, wherein copolymers are used that can be obtained by first of all polymerizing aromatic monovinyl comonomers with conjugated dienes and then subjecting the product to a hydrogenation reaction.

6. A thermoplastic polymer mixture containing
a) 0.5 to 30% by weight of the thermoplastic coupling agent mixture (A)
b) 5 to 95% by weight of polyolefins (B), and
c) 5 to 95% by weight of copolymers of styrene (C).

7. A thermoplastic polymer mixture as claimed in claim 6, containing as further constituent
d) 0.1 to 40% by weight of further thermoplastic polymers (D).

8. A process for preparing the thermoplastic coupling agent mixture (A) as claimed in claim 1 or 2 or 3 or 4 or 5, wherein the components (A_{I}) and (A_{II}) are mixed in a suitable mixing apparatus at average residence times of the components of from 0.2 to 30 minutes and at from 220 to 290°C.

9. A process for preparing a thermoplastic polymer mixture as claimed in claim 6 or 7, wherein the individual components (A), (B), (C), and also, if to be used, (D) are mixed in a suitable mixing apparatus at average residence times of the components of from 0.2 to 30 minutes and from 220 to 290°C.

10. A process as claimed in claim 9, wherein the components (B), (C), and also, if to be used, (D) comprise re-used polymers obtainable by regranulation of molded parts made from the relevant materials, in an amount of up to 100% by weight based on the respective proportion in the molding material.

11. The use of a thermoplastic polymer mixture as claimed in claim 6 or 7 for producing fibers, films and molded articles.

## Revendications

1. Mélange thermoplastique compatibilisant (A), contenant
a) de 5 à 95% en poids d'un copolymère d'éthylène (A_{I}) avec de faibles quantités de comonomères polaires et
b) 5 A 95% en poids d'un copolymère (A_{II}) de comonomères monovinylaromatiques et de diènes conjugués.

2. Mélange thermoplastique compatibilisant (A) selon la revendication 1, dans lequel on utilise comme comonomères polaires du copolymère d'éthylène (A_{I}) des acides carboxyliques ou des dérivés d'acide carboxylique α,β insaturés.

3. Mélange thermoplastique compatibilisant (A) selon l'une ou l'autre des revendications 1 et 2, dans lequel on utilise du styrène comme comonomère monovinyl-aromatique du copolymère (A_{II}).

4. Mélange thermoplastique compatibilisant (A) selon l'une quelconque des revendications 1 à 3, dans lequel on utilise du butadiène comme diène conjugué dans le copolymère (A_{II}).

5. Mélange thermoplastique compatibilisant (A) selon l'une quelconque des revendications 1 à 4, dans lequel on utilise des copolymères (A_{II}) que l'on peut obtenir en polymérisant d'abord des comonomères monovinyl-aromatiques avec des diènes conjugués et en effectuant ensuite une réaction d'hydrogénation.

6. Mélange de polymères thermoplastique, contenant
a) de 0,5 à 30% en poids du mélange thermoplastique compatibilisant (A)
b) de 5 à 95% en poids de polyoléfine (B) et
c) de 5 à 95% en poids de copolymères du styrène (C).

7. Mélange de polymères thermoplatique selon la revendication 6, contenant comme autre composant
d) de 0,1 à 40% en poids d'autres polymères thermoplastiques (D).

8. Procédé de préparation du mélange thermoplastique compatibilisant (A) selon l'une quelconque des revendications 1 à 5, caractérisé en ce qu'on mélange les composants (A_{I}) et (A_{II}) dans un dispositif d'agitation approprié pendant un temps de séjour moyen des composants de 0,2 à 30 min. et à des températures de 220 à 290°C.

9. Procédé de préparation d'un mélange de polymères thermoplastique selon l'une ou l' autre des revendications 6 et 7, dans lequel on mélange les composants individuels (A), (B) et (C), ainsi qu'éventuellement (D) dans un dispositif d'agitation approprié avec des temps de séjour moyens des composants de 0,2 à 30 min. et des températures de 220 à 290°C.

10. Procédé selon la revendication 9, caractérisé en ce que les composants (B), (C) et éventuellement (D) se composent de polymères de récupération dans une proportion allant jusqu'à 100% en poids par rapport à chaque partie de la masse à mouler, polymères que l'on a obtenu par regranulation de corps moulé des matériaux en question.

11. Utilisation du mélange de polymères thermoplastique selon l'une des revendications 6 et 7, pour la préparation de fibres, feuilles et corps moulés.
